# EUROPÄISCHE PATENTANMELDUNG

(11) **EP 3 967 264 A1**
(43) Veröffentlichungstag der Anmeldung: **16.03.2022**
(21) Anmeldenummer: 20196289.1
(22) Anmeldetag: 15.09.2020
(51) Int. Cl.: A61C 13/20, F27B 17/02, G01K 7/25

(54) **DENTAL-BRENNOFEN SOWIE VERFAHREN ZUM BETREIBEN EINES DENTAL-BRENNOFENS**

(71) Anmelder: VITA-ZAHNFABRIK H. Rauter GmbH & Co. KG, 79713 Bad Säckingen (DE)
(72) Erfinder: Rauh, Dr. Wolfgang, 79713 Bad Säckingen (DE); Arnold, Peter, 79713 Bad Säckingen (DE)
(74) Vertreter: dompatent von Kreisler Selting Werner - Partnerschaft von Patent- und Rechtsanwälten mbB

(57) **Zusammenfassung**

Ein Dental-Brennofen zum Brennen dentalkeramischer Massen weist eine Brennkammer (20) zur Aufnahme zu brennender Keramikelemente (14) auf. Das Aufheizen der Brennkammer (20) erfolgt mit Hilfe einer Heizeinrichtung (24). Die Heizeinrichtung (24) ist über eine Widerstandsmesseinrichtung (25) mit einer Auswerteeinrichtung (26) verbunden. Mithilfe der Auswerteeinrichtung (26) kann ein Bestimmen der Temperatur in der Brennkammer (20) und/oder ein Bestimmen eines Betriebszustandes des Dental-Brennofen erfolgen.

## Beschreibung

Die Erfindung betrifft einen Dental-Brennofen zum Brennen dentalkeramischer Massen sowie zum Aufbrennen dentalkeramischer Masen auf Dental-Legierungen, Zirkonoxid und/oder andere keramische Werkstoffe. Ferner betrifft die Erfindung ein Verfahren zum Betreiben eines derartigen Dental-Brennofens.

Bekannte Dental-Brennöfen weisen eine üblicherweise evakuierbare Brennkammer zur Aufnahme zu brennender Keramikelemente auf. Zum Brennen der Keramikelemente ist in der Brennkammer ferner eine elektrische Heizeinrichtung zum Erwärmen/Brennen des Keramikelements vorgesehen. Als elektrische Heizeinrichtung sind Heizdrähte bekannt. Ferner ist in der Brennkammer bei bekannten Dental-Brennöfen ein Temperatursensor vorgesehen. Zum Brennen eines Keramikelements wird dieses bei offener Brennkammer auf einem Sockel angeordnet. Bevor der Brennofen geschlossen werden kann, muss das Keramikelement vortrocknen, um sicherzustellen, dass beim Brennen ein vollständiges Durchbrennen des Keramikelements erfolgt. Anderenfalls würde beim Brennen des Keramikelements eine äußere Schicht gebrannt und abdichten, wobei der innere Kernbereich des Keramikelements noch feucht ist und nicht vollständig durchgebrannt werden kann. Dies führt zu Rissen und somit zur Zerstörung des Keramikelements.

Nach erfolgtem Vortrocknen wird die Brennkammer geschlossen. Hierbei muss ferner sichergestellt sein, dass die Temperatur in der Brennkammer vor dem Schließen nicht zu hoch ist. Nach dem Schließen erfolgt das Durchführen eines Brennprogramms, in diesem sind insbesondere Heizkurven hinterlegt. Derartige Dental-Brennöfen weisen den Nachteil auf, dass zur Temperaturbestimmung in der Brennkammer teure Temperatursensoren angeordnet sein müssen.

Aufgabe der Erfindung ist es einen Dental-Brennofen zum Brennen dentalkeramischer Massen zu schaffen, bei dem ein unmittelbar in der Brennkammer angeordneter Temperatursensor nicht erforderlich ist. Ferner ist es Aufgabe der Erfindung ein Verfahren zum Betreiben eines derartigen Dental-Brennofens zu schaffen.

Die Lösung der Aufgabe erfolgt erfindungsgemäß durch einen Dental-Brennofen mit den Merkmalen des Anspruchs 1, bzw. ein Verfahren zum Betreiben eines Dental-Brennofens mit den Merkmalen des Anspruchs 9.

Der erfindungsgemäße Dental-Brennofen weist eine elektrische Heizeinrichtung zum Erwärmen/Brennen des Keramikelements auf. Erfindungsgemäß ist mit der elektrischen Heizeinrichtung eine Widerstandsmesseinrichtung verbunden. Mit der Widerstands-Messeinrichtung ist erfindungsgemäß eine Auswerteeinrichtung verbunden. Mit dieser ist es möglich, eine in der Brennkammer herrschende Temperatur zu bestimmen und/oder einen Betriebszustand des Dental-Brennofens zu bestimmen. Das Bestimmen der Temperatur kann hierbei beispielsweise aufgrund des gemessenen Widerstands durch einen Vergleich mit hinterlegten Referenzwerten erfolgen. In Abhängigkeit des gemessenen Widerstands kann auch ein durch Vergleichswerte definierter Betriebszustand ermittelt werden. Ein unmittelbar in der Brennkammer angeordneter teurer Temperatursensor ist erfindungsgemäß nicht erforderlich.

Vorzugsweise ist die Widerstandsmesseinrichtung mit der Heizeinrichtung, insbesondere einem Heizdraht der Wärmestrahlung emittiert verbunden. Das Verbinden erfolgt verzugsweise an zwei unterschiedlichen Stellen, um den, je nach Temperatur des Heizdrahts, unterschiedlichen Widerstand bestimmen zu können.

Um eine möglichst genaue Widerstandsmessung und somit eine genaue Bestimmung der tatsächlich in der Brennkammer herrschenden Temperatur vornehmen zu können, ist es bevorzugt, dass die zwei Verbindungsstellen an den beiden Enden des Heizdrahtes, d.h. insbesondere am Anfang und am Ende des Heizdrahtes angeordnet sind. Zwischen den beiden Verbindungsstellen ist somit der für das Beheizen der Brennkammer relevante bzw. aktive Teil des Heizdrahtes, vorzugsweise vollständig, angeordnet. Eine der beiden Verbindungsstellen kann somit im Deckelbereich bzw. im oberen Bereich der Brennkammer und die andere Verbindungsstelle, vorzugsweise an einem unteren Bereich der Brennkammer, ggf. auf Höhe des Sockels, angeordnet sein. Dies ist von der Ausgestaltung und Anordnung des Heizdrahts in der Brennkammer abhängig.

Zusätzlich können zur weiteren Verbesserung der Qualität der Messung auch an einem mittleren Bereich des Heizdrahtes eine oder mehrere Verbindungsstellen vorgesehen sein. Sämtliche Verbindungsstellen sind mit der Auswerteeinrichtung verbunden, wobei die Auswerteeinrichtung insbesondere eine Widerstandsänderung detektiert bzw. bestimmt.

Die Widerstandsmessung kann auch bei der Verwendung von Heizstrahlern als elektrische Heizelemente eingesetzt werden, die z.B. unterhalb des Brennkammerdeckels angeordnet sind. Dabei können insbesondere auch mehrere Heizstrahler, z.B. in elektrischer Reihenschaltung, zum Einsatz kommen. Die Verbindungsstellen zur Widerstandsmessung werden dann am Anfang des Leiters für den ersten Heizstrahler und am Ende des Leiters des letzten Heizstrahlers sowie ggf. zwischen den mehreren Heizstrahler angeordnet

In besonders bevorzugter Weiterbildung erfolgt eine Kalibrierung der Widerstandsmessung. Dies kann insbesondere dadurch erfolgen, dass der Widerstand des Heizdrahts bei einer bekannten Temperatur gemessen wird. Aufgrund der Widerstandsänderung kann sodann eine Temperaturänderung bestimmt werden. Hierzu ist in besonders bevorzugter Ausführungsform eine Temperaturmesseinrichtung vorgesehen. Diese ist vorzugsweise im Bereich des zu brennenden Keramikelements, insbesondere im Sockel auf dem das Keramikelement angeordnet wird, vorgesehen. Ferner kann der Temperatursensor derart angeordnet werden, dass er nach der Messung der Temperatur und vor dem Durchführen des Brennprozesses entfernt wird, sodass der Temperatursensor durch die hohen in der Brennkammer auftretenden, auch den Sockel erwärmenden Temperaturen nicht beschädigt werden kann. Die Auswerteeinrichtung ist einerseits über die Verbindungsstellen zur Widerstandsmessung mit dem Heizdraht verbunden und in bevorzugter Ausführungsform ferner mit der Temperaturmesseinrichtung. Hierdurch ist es möglich, dass die Auswerteeinrichtung eine Relation zwischen dem gemessenen Widerstand und der gemessenen Temperatur herstellen kann.

In einer Weiterbildung des erfindungsgemäßen Dental-Brennofens kann die Auswerteeinrichtung ferner mit einem Daten-Speicherelement verbunden sein. In diesem können insbesondere zu einer kontinuierlichen Auswertung Messdaten, einschließlich der Messzeitpunkte, gespeichert werden. Hierdurch ist es beispielsweise möglich, Veränderungen des Heizwiderstandes und somit den Verschleiß des Heizwiderstandes zu bestimmen.

Bei dem erfindungsgemäßen Verfahren, das insbesondere zum Betreiben eines Dental-Brennofens, wie vorstehend beschrieben, geeignet ist, erfolgt ein Messen eines Widerstands der Heizeinrichtung mittels einer Widerstands-Messeinrichtung. Der gemessene Widerstand wird an die Auswerteeinrichtung übermittelt. Ebenso ist es möglich, nur einzelne Werte der Messung an die Auswerteeinrichtung zu übermitteln, die sodann hieraus den gemessenen Widerstand berechnet. Erfindungsgemäß erfolgt auf Basis des gemessenen Widerstands oder anderer Messdaten der Heizeinrichtung ein Bestimmen einer Temperatur und/oder eines Betriebszustandes durch die Auswerteeinrichtung.

Wie vorstehend anhand des erfindungsgemäßen Dental-Brennofens beschrieben ist es bevorzugt, dass die Auswerteeinrichtung kalibriert wird. Die Kalibrierung erfolgt insbesondere, in dem ein gemessener Widerstand zu einer gemessenen Temperatur in Bezug gesetzt wird. Hierbei kann insbesondere vor dem Schließen des Dental-Brennofens eine Temperatur, insbesondere im Bereich des Sockels gemessen werden. Gleichzeitig erfolgt das Messen des Widerstandes, sodass eine einfache Kalibrierung möglich ist.

Vorzugsweise kann mit der Auswerteeinrichtung auf Basis einer gemessenen Widerstandsänderung eine Temperaturänderung bestimmt werden. Dies kann durch hinterlegte Tabellen, Berechnungen und/oder entsprechende Kalibrierung erfolgen.

In einem, ggf. vorgesehenen Daten-Speicherelement, können die gemessenen Widerstandsdaten, insbesondere die gemessenen Zeitpunkte gespeichert werden. Insofern ist es möglich aufgrund dieser Daten eine Auswertung durchzuführen. Beispielsweise kann auf Basis der gespeicherten Daten der Verschleiß des Heizelements bestimmt werden.

Vorzugsweise erfolgt die Widerstandsmessung zumindest zunächst bei offener Brennkammer. Zur weiteren Verbesserung der Kalibrierung ist es bevorzugt, dass eine Widerstandsmessung auch bei geschlossener Brennkammer erfolgt.

In Abhängigkeit der ermittelten Temperaturen können Prozessschritte aktiviert werden. Hierbei kann es sich beispielsweise um ein Öffnen oder Schließen der Brennkammer handeln.

Vorteilhafte Weiterbildung des erfindungsgemäßen Verfahrens sind ferner vorstehend anhand des Dentalen-Brennofens beschrieben.

Nachfolgend wird die Erfindung anhand einer bevorzugten Ausführungsform unter Bezug auf die anliegende Zeichnung näher beschrieben.

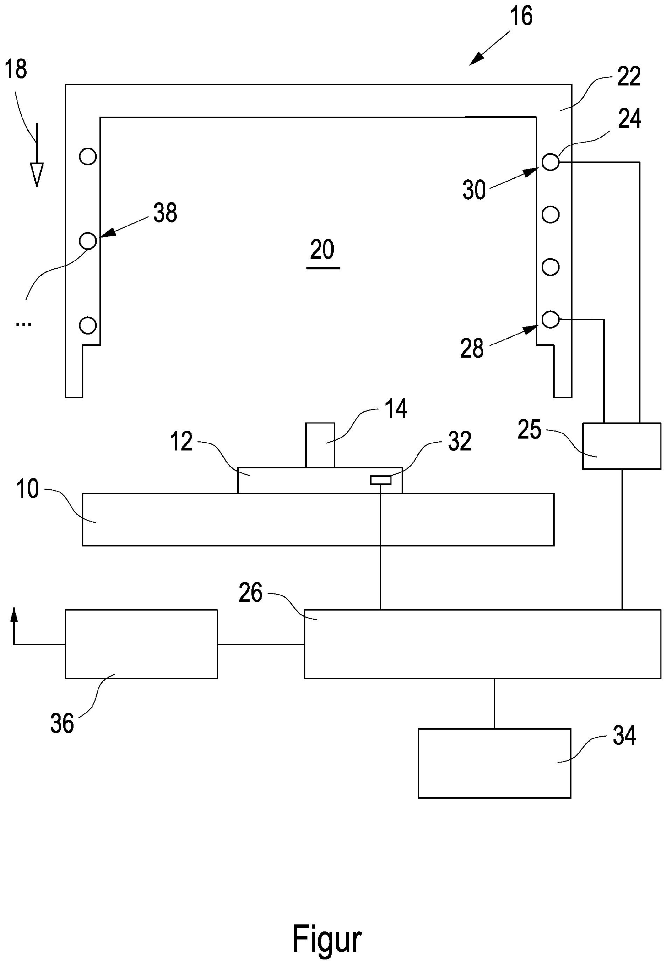

Die Figur zeigt eine stark vereinfachte schematische Schnittansicht des erfindungsgemäßen Dental-Brennofens.

Der Dental-Brennofen weist ein Basiselement 10 auf, auf dem ein Sockel 12 angeordnet ist. Der Sockel 12 dient zur Anordnung eines schematisch dargestellten Keramikelements 14. Ein Gehäuse 16 ist in der Figur in Offenstellung dargestellt und kann zum Schließen in Richtung eines Pfeils 18 verschoben werden, sodass eine Brennkammer 20 ausgebildet ist.

Schematisch dargestellt ist in der, insbesondere zylindrisch ausgebildeten Seitenwand 22, eine als Heizdraht spiralförmig angeordnete Heizeinrichtung 24.

Zur Ermittlung des Widerstands des Heizdrahtes 24 ist eine Auswerteeinrichtung 26 an zwei Verbindungsstellen 28, 30 mit dem Heizdraht verbunden. Die Verbindungsstellen 28, 30 sind an den beiden Enden des Heizdrahtes bzw. der Heizelemente 24 angeordnet, sodass beispielsweise die Verbindungsstelle 28 am Anfang und die Verbindungsstelle 30 am Ende des für das Beheizen der Brennkammer 20 relevanten Teils des Heizdrahtes 24 angeordnet ist.

Mit den Verbindungsstellen 28, 30 ist eine Widerstandsmesseinrichtung 25 verbunden. Die von der Widerstandsmesseinrichtung 25 ermittelten Widerstandsdaten werden an die Auswerteeinrichtung 26 übermittelt. Die Widerstandsmesseinrichtung 25 kann auch in die Auswerteeinrichtung 26 integriert sein.

Des Weiteren kann insbesondere in einem mittleren Bereich des Heizdrahtes 24 eine weitere Verbindungsstelle 38 vorgesehen sein. Diese ist wiederum mit der Widerstandsmesseinrichtung 25 verbunden.

Mit Hilfe der Auswerteeinrichtung 26 kann ein Widerstand des Heizdrahts 24 bzw. eine Widerstandsänderung bestimmt werden.

Zur Kalibrierung und somit zur Bestimmung einer definierten Temperatur ist innerhalb des Sockels 12 ein Temperatursensor 32 angeordnet, der ebenfalls mit der Auswerteeinrichtung 26 verbunden ist.

Die in der Auswerteeinrichtung 26 ermittelten Daten werden an ein Daten-Speicherelement 34 übermittelt. Durch eine entsprechende Auswertung der Daten ist es zum Beispiel möglich den Verschleiß des Heizdrahtes festzustellen. Ferner können die von der Auswerteeinrichtung ermittelten Daten an eine Steuereinrichtung 36 übermittelt werden. Die Steuereinrichtung 36 kann beispielsweise ein Öffnen oder ein Schließen des Gehäuses 16 erfolgen.

## Patentansprüche

1. Dental-Brennofen zum Brennen dentalkeramischer Massen, mit
einer Brennkammer (20) zur Aufnahme zu brennender Keramikelemente (14),
einer elektrischen Heizeinrichtung (24) zum Erwärmen/Brennen des Keramikelements (14),
einer mit der Heizeinrichtung (24) verbundenen Widerstands-Messeinrichtung (25) und
einer mit der Widerstands-Messeinrichtung (25) verbundenen Auswerteeinrichtung (26) zum Bestimmen einer Temperatur in der Brennkammer (20) und/oder eines Betriebszustandes des Dental-Brennofens.

2. Dental-Brennofen zum Brennen dentalkeramischer Massen nach Anspruch 1, **dadurch gekennzeichnet, dass** die Heizeinrichtung (24) einen Heizdraht aufweist.

3. Dental-Brennofen zum Brennen dentalkeramischer Massen nach Anspruch 1 oder 2, **dadurch gekennzeichnet, dass** die Widerstands-Messeinrichtung (25) mit der Heizeinrichtung (24), insbesondere an mindestens zwei Verbindungsstellen (28, 30), verbunden ist.

4. Dental-Brennofen zum Brennen dentalkeramischer Massen nach Anspruch 3, **dadurch gekennzeichnet, dass** die Verbindungsstelle (28, 30) an den beiden Enden des Heizdrahts (24) angeordnet sind, wobei vorzugsweise eine der Verbindungsstellen (28) am Anfang und die zweite Verbindungsstelle (39) am Ende des Heizdrahtes vorgesehen ist, besonders bevorzugt eine der Verbindungsstellen (30) im Deckenbereich der Brennkammer vorgesehen ist.

5. Dental-Brennofen zum Brennen dentalkeramischer Massen nach Anspruch 3, **dadurch gekennzeichnet, dass** mindestens eine weitere Verbindungsstelle (38) in einem Mittelbereich des Heizdrahtes (24), insbesondere zwischen der Verbindungsstelle am Anfang und der Verbindungsstelle am Ende des Heizdrahtes (24) vorgesehen ist.

6. Dental-Brennofen zum Brennen dentalkeramischer Massen nach Anspruch 1 bis 5, **dadurch gekennzeichnet, dass** die Auswerteeinrichtung (26) eine Widerstandsänderung bestimmt und/oder dass insbesondere im Bereich des zu brennenden Keramikelements eine Temperaturmesseinrichtung (32) vorgesehen ist.

7. Dental-Brennofen zum Brennen dentalkeramischer Massen nach Anspruch 6, **dadurch gekennzeichnet, dass** die Auswerteeinrichtung (26) mit der Temperaturmesseinrichtung (32) verbunden ist und eine Relation zwischen dem gemessenen Widerstand und der gemessenen Temperatur herstellt.

8. Dental-Brennofen zum Brennen dentalkeramischer Massen nach Anspruch 1 bis 7, **dadurch gekennzeichnet, dass** die Auswerteeinrichtung (26) mit einem Daten-Speicherelement (34) verbunden ist, in dem insbesondere Messdaten speicherbar sind, wobei die Auswerteeinrichtung (26) zur Bestimmung des Verschleißes der Heizeinrichtung (24) Messdaten vergleicht.

9. Verfahren zum Betreiben eines Dental-Brennofens nach einem der Ansprüche 1 bis 8, mit den Schritten
Messen eines Widerstandes der Heizeinrichtung (24) mittels der Widerstands-Messeinrichtung (25),
Übermitteln des gemessenen Widerstands an die Auswerteeinrichtung (26) und
Bestimmen einer Temperatur und/oder eines Betriebszustandes durch die Auswerteeinrichtung.

10. Verfahren zum Betreiben eines Dental-Brennofens nach Anspruch 9, bei welchem die Auswerteeinrichtung (26) kalibriert wird, indem ein gemessener Widerstand zu einer gemessenen Temperatur in Bezug gesetzt wird.

11. Verfahren zum Betreiben eines Dental-Brennofens nach Anspruch 9 oder 10, bei welchem eine Widerstandsänderung gemessen wird und hieraus eine Temperaturänderung bestimmt wird.

12. Verfahren zum Betreiben eines Dental-Brennofens nach Anspruch 9 bis 11, bei welchem die gemessenen Widerstandsdaten, insbesondere zusammen mit Messzeitpunkten in den Daten-Speichenelementen (34) gespeichert werden, wobei vorzugsweise auf Basis der gespeicherten Daten ein Verschleiß des Heizelements (24) bestimmt wird.

13. Verfahren zum Betreiben eines Dental-Brennofens nach Anspruch 9 bis 12, bei welchem die Widerstandsmessung bei offener Brennkammer (20) erfolgt.

14. Verfahren zum Betreiben eines Dental-Brennofens nach Anspruch 9 bis 12, bei welchem die Widerstandsmessung und Kennlinienkalibrierung bei geschlossener Brennkammer (20) erfolgt.

15. Verfahren zum Betreiben eines Dental-Brennofens nach Anspruch 9 bis 14, bei dem abhängig von der ermittelten Temperatur nachfolgende Prozessschritte, z.B. das schrittweise Öffnen und Schließen der Brennkammer (20) gesteuert werden.
